# EUROPÄISCHE PATENTANMELDUNG

(11) **EP 2 347 927 A2**
(43) Veröffentlichungstag der Anmeldung: **27.07.2011**
(21) Anmeldenummer: 10194355.3
(22) Anmeldetag: 09.12.2010
(51) Int. Cl.: B60L 11/18, H02J 7/02

(54) **System zum Laden einer Batterie eines Kraftfahrzeuges**

(30) Priorität: 22.12.2009 DE 102009059976
(71) Anmelder: HS Genion GmbH, 82205 Gilching (DE)
(72) Erfinder: Wegener, Fritz, 82205, Gilching (DE); Schmeier, Thorsten, 86919, Utting (DE)
(74) Vertreter: Grünberg, Thomas

(57) **Zusammenfassung**

Es wird ein System zum Laden einer Batterie eines Kraftfahrzeuges (10) vorgeschlagen, umfassend eine stationäre Ladestation (14) und eine fahrzeugfeste Kopplungseinheit (12). Die fahrzeugfeste Kopplungseinheit (12) umfasst ein Kopplungselement (22, 42, 56, 68, 74, 94), das am Fahrzeugbug, am Fahrzeugheck oder an einer der Fahrzeugseiten angeordnet ist und das zumindest in einer Ladestellung mit einem Ladeelement (30) der Ladestation (14) elektrisch gekoppelt ist, wobei das Kopplungselement (22, 42, 56, 68, 74, 94) gegenüber einem festen Fahrzeugaußenhautabschnitt vorspringt und in das Ladelement (30, 92) der Ladestation eingreift oder in das Kopplungselement in einer Ladestellung das Ladeelement der Ladestation eingreift oder das Kopplungselement bündig, konturfrei oder verdeckt in das Fahrzeugbug, am Fahrzeugheck oder an einer der Fahrzeugseiten integriert ist und in einer Ladestellung mit dem Ladelement der Ladestation induktiv gekoppelt ist.

## Beschreibung

Die Erfindung betrifft ein System zum Laden eines Kraftfahrzeuges gemäß dem Oberbegriff des Patentanspruchs 1.

Die Verbreitung von Elektrofahrzeugen wird in jüngster Zeit immer größer. Um den Vorgang des Ladens der Batterie der Elektrofahrzeuge möglichst einfach zu gestalten, besteht der Bedarf, ein weit verbreitetes Netz an Ladestationen zur Verfügung zu stellen. Dies liegt auch in der begrenzten Reichweite bisheriger Elektrofahrzeuge begründet. Des Weiteren ist man bestrebt, den Ladevorgang für den Nutzer möglichst komfortabel zu gestalten.

Aus der Praxis sind verschiedene Ladesysteme für Elektrofahrzeuge bekannt. Diese können als konduktive oder als induktive Systeme ausgelegt sein. Bei konduktiven Systemen wird beim Laden der Kraftfahrzeugbatterie eine stationäre Ladestation über elektrische Verbinder mit einer fahrzeugfesten Kopplungseinheit verbunden. Beispielsweise umfasst die Ladestation einen elektrischen Steckverbinder, der in eine korrespondierende Buchse des betreffenden Kraftfahrzeuges eingesteckt wird. Bei induktiven Systemen stellt die Ladestation die Primärseite dar, die ein Magnetfeld erzeugt, welches auf eine Spule der die Sekundärseite darstellenden fahrzeugfesten Kopplungseinheit wirkt und dort einen elektrischen Strom induziert, der in der Kraftfahrzeugbatterie gespeichert werden kann.

Ein bekanntes, induktiv arbeitendes Ladesystem ist derart ausgebildet, dass die Ladestation bzw. die Primärseite eine auf dem Boden angeordnete oder in den Boden integrierte Ladeplatte ist. Die Sekundärseite, die von der fahrzeugfest ausgebildeten Kopplungseinheit gebildet ist, hat daher einen Mindestabstand, der durch den Unterboden des betreffenden Fahrzeugs vorgegeben ist. Dieser Abstand kann so groß sein, dass der Wirkungsgrad des Ladesystems unzureichend wird.

Der Erfindung liegt die Aufgabe zugrunde, ein System zum Laden einer Batterie eines Kraftfahrzeuges bereitzustellen, das eine einfache Kopplung zwischen der stationären Ladestation und der fahrzeugfesten Kopplungseinheit zulässt und damit einen bedienungsfreundlichen Ladevorgang ermöglicht.

Diese Aufgabe ist erfindungsgemäß durch das System zum Laden einer Batterie eines Kraftfahrzeuges mit den Merkmalen des Patentanspruchs 1 gelöst.

Erfindungsgemäß wird also ein System zum Laden einer Batterie eines Kraftfahrzeuges vorgeschlagen, umfassend eine stationäre Ladestation und eine fahrzeugfeste Kopplungseinheit. Die fahrzeugfeste Kopplungseinheit umfasst wiederum ein Kopplungselement, das am Fahrzeugbug, am Fahrzeugheck oder an einer der Fahrzeugseiten angeordnet ist und das zumindest in einer Ladestellung mit einem Ladeelement der Ladestation elektrisch gekoppelt ist, wobei das Kopplungselement gegenüber einem festen Fahrzeugaußenhautabschnitt vorspringt und in das Ladelement der Ladestation eingreift oder in das Kopplungselement in einer Ladestellung das Ladeelement der Ladestation eingreift oder das Kopplungselement bündig, konturfrei oder verdeckt in den Fahrzeugbug, am Fahrzeugheck oder an einer der Fahrzeugseiten integriert ist und in einer Ladestellung mit dem Ladelement der Ladestation induktiv gekoppelt ist.

Bei dem Ladesystem nach der Erfindung ist es mithin möglich, dass der betreffende Benutzer bzw. Fahrer des betreffenden Kraftfahrzeuges zur Kopplung der fahrzeugfesten Kopplungseinheit mit der stationären Ladestation das Fahrzeug in eine bestimmte Position bringt, in der die stationäre Ladestation und die fahrzeugfeste Kopplungseinheit miteinander gekoppelt werden können.

Die Begriffe Fahrzeugbug und Fahrzeugheck sind jeweils in ihrem breitesten Sinne zu verstehen und umfassen auch frontseitige und heckseitige Fahrzeugseitenbereiche, die sich an die Stirnseiten des betreffenden Fahrzeugs anschließen. Beispielsweise laufen bei einer am Heck oder am Bug angeordneten Stoßstange die Endbereiche beidseits an den Fahrzeugseiten aus. Auch solche Endbereiche können im Sinne der Erfindung dem Fahrzeugbug oder dem Fahrzeugheck zugeordnet werden.

Beispielsweise ist das Kopplungselement der fahrzeugfesten Kopplungseinheit ein starr gegenüber dem Fahrzeugaufbau angeordnetes Strukturelement des betreffenden Kraftfahrzeuges, das gegenüber dem angrenzenden Fahrzeugaufbau vorspringt und in eine korrespondierende Aufnahme der Ladestation eingreift.

Bei einer speziellen Ausführungsform des Ladesystems nach der Erfindung stellt das Kopplungselement zumindest einen Teil eines Stoßfängers bzw. einer Stoßstange des Kraftfahrzeuges dar, der bzw. die in der Ladestellung in eine das Ladeelement bildende Ladeschiene der Ladestation eingreift. Denkbar ist es auch, dass das Kopplungselement von einer starren oder ausfahrbaren Anhängerkopplung des betreffenden Fahrzeugs gebildet ist.

Bei einer weiteren speziellen Ausführungsform kann an einer gewünschten Stelle des Fahrzeugumfangs, d.h. am Fahrzeugbug, am Fahrzeugheck oder einer der Fahrzeugseiten, ein plattenartig ausgebildetes Kopplungselement starr integriert sein, wobei dann zum Erreichen der Ladestellung das Fahrzeug als ganzes in eine optimale Position gegenüber der Ladestation gebracht wird, so dass das Kopplungselement und das Ladeelement der Ladestation elektrisch miteinander koppeln können. Hierzu ist es vorteilhaft, wenn das Ladesystem ein Abstandssensorsystem aufweist. Als Abstandssensorsystem kann insbesondere auch das an dem betreffenden Fahrzeug ohnehin vorhandene, als Parkhilfe dienende Abstandssensorsystem genutzt werden.

Bei einer alternativen Ausführungsform des Ladesystems nach der Erfindung ist das Kopplungselement ein Ladearm, der vorzugsweise mittels eines Antriebs gegenüber dem Fahrzeugaufbau ausfahrbar ist. Im Fahrbetrieb des Kraftfahrzeuges ist der Ladearm von dem Fahrzeugaufbau aufgenommen. Zum Laden der Batterie des Fahrzeugs wird der Ladearm ausgefahren.

Der Ladearm kann linear verschiebbar sein und in diesem Fall mittels eines in einen Zahnstangenabschnitt eingreifenden Antriebsrads angetrieben sein oder auch verschwenkbar gelagert sein.

Eine nur einen geringen Bauraum aufweisende Ausfiihrungsform liegt vor, wenn der Ladearm mittels eines Seilzugs angetrieben wird, der manuell oder auch mittels eines an einer günstigen Stelle des betreffenden Kraftfahrzeuges angeordneten Stellantriebs betätigbar ist.

Bei einer speziellen Ausführungsform ist der Ladearm in einem fahrzeugfesten Gehäuse gelagert. Dieses Gehäuse ist vorzugsweise in einer korrespondierenden Ausnehmung am Heck oder am Bug des betreffenden Kraftfahrzeuges fixiert.

Zur Erhöhung der Verkehrssicherheit und auch zur Verbesserung des optischen Erscheinungsbilds des betreffenden Kraftfahrzeuges weist das Gehäuse bei einer vorteilhaften Ausführungsform ein verschwenkbares oder auch ein verschiebbares Abdeckelement auf.

Das Abdeckelement kann mittels eines entsprechenden Antriebs elektrisch betätigbar oder auch mittels einer Federeinrichtung in Schließstellung vorgespannt sein, so dass es durch den auffahrenden Ladearm in eine Öffnungsstellung gedrückt wird.

Beispielsweise ist das verschwenkbare Abdeckelement ein Kennzeichenfeld des Kraftfahrzeuges. Dies bedeutet, dass zum Laden der Batterie des Kraftfahrzeuges das Kennzeichenfeld verschwenkt wird, so dass der Ladearm mit der Ladestation gekoppelt werden kann.

Um das betreffende Kraftfahrzeug positionsgenau in eine Ladestellung bringen zu können, umfasst die fahrzeugfeste Kopplungseinheit vorzugsweise mindestens einen Abstandssensor zur Bestimmung des Abstands zwischen dem Kopplungselement und dem Ladeelement.

Um die Ladestation selbsttätig mit der fahrzeugfesten Kopplungseinheit koppeln zu können, kann das Ladesystem nach der Erfindung eine automatische Positioniereinrichtung aufweisen, die bei abgestelltem Fahrzeug den Kopplungsarm zu dem Ladeelement der Ladestation führt oder das Ladeelement der Ladestation zu dem Kopplungselement der fahrzeugfesten Kopplungseinheit führt.

Ferner kann das Ladesystem nach der Erfindung eine automatische Positioniereinrichtung umfassen, die das Fahrzeug in eine Ladestellung führt und mit einer Lenkeinheit und/oder einer Antriebseinheit des Fahrzeugs zusammenwirkt.

Um dem Fahrer des betreffenden Fahrzeugs die optimale Position des Fahrzeugs bzw. die Ladestellung anzuzeigen, kann eine optische und/oder akustische Signaleinheit vorgesehen sein, die das Erreichen der Ladestellung anzeigt. Beispielsweise ist das Parkassistenzsystems des Fahrzeugs um eine zusätzliche Leuchte in einer weiteren Farbe oder um einen zusätzlichen Signalton erweitert.

Zur Erleichterung der Kopplung zwischen Ladestation und Kopplungseinheit kann die Ladestation eine beispielsweise trichterartige bzw. nach Art von Leitblechen ausgeführte Führungseinrichtung aufweisen, über die das fahrzeugfeste Kopplungselement zu dem Ladeelement der Ladestation geführt wird.

Um eine Beschädigung des Ladesystems beim Koppeln von Ladeelement und Kopplungselement zu verhindern, kann zumindest eines dieser beiden Elemente elastisch gelagert sein. Beim Aufeinandertreffen des Ladeelements und des Kopplungselements ist das System damit nachgiebig.

Wenn das Ladesystem nach der Erfindung ein konduktives Ladesystem ist, umfassen das Kopplungselement der fahrzeugfesten Kopplungseinheit und das Ladeelement der stationären Ladeeinheit zweckmäßigerweise jeweils zwei Kontaktelemente zur Kopplung der Kopplungseinheit mit der Ladestation.

Im Falle eines konduktiven Ladesystems kann das Ladeelement der Ladestation eine Schiene darstellen, die zwei Kontaktfedern aufweist, die jeweils mit einer Elektrode des Kopplungselements der fahrzeugfesten Kopplungseinheit elektrisch verbunden werden können.

Wenn das Ladesystem nach der Erfindung ein induktives Ladesystem ist, bildet die Ladestation die Primärseite und die fahrzeugfeste Kopplungseinheit die Sekundärseite des induktiven Ladesystems.

Insbesondere bei einem induktiv arbeitenden Ladesystem ist es denkbar, dass das Ladeelement der Ladestation an der Innenseite eines Garagentors angeordnet ist und beispielsweise schienenartig ausgebildet ist. In der Schließstellung des Garagentors ist das Ladeelement mit dem Kopplungselement der fahrzeugfesten Kopplungseinheit des in der Garage abgestellten Kraftfahrzeugs gekoppelt. Beim Verschwenken des Garagentors wird also das Ladeelement mit dem Kopplungselement in Eingriff gebracht. So kann beispielsweise eine heckseitige Stoßstange des Kraftfahrzeuges die Sekundärseite eines induktiven Ladesystems darstellen, die bei geschlossenem Garagentor mit einer als Ladeschiene ausgebildeten Primärseite des Ladesystems in Eingriff gebracht wird, die das Ladeelement der Ladestation darstellt.

Zweckmäßigerweise weist das Ladesystem nach der Erfindung des Weiteren einen Aktivierungsschalter auf, der vorzugsweise das Ladesystem selbsttätig aktiviert, wenn das Ladeelement gegenüber dem Kopplungselement eine Ladestellung eingenommen hat. Im Falle eines Garagentors kann der Aktivierungsschalter in das Garagentor integriert sein und eine Schließstellung des Garagentors erkennen, bei der das Ladesystem aktiviert wird.

Die Erfindung hat auch ein System zum Laden einer Batterie eines Kraftfahrzeuges zum Gegenstand, umfassend eine stationäre Ladestation und eine fahrzeugfeste Kopplungseinheit, wobei die fahrzeugfeste Kopplungseinheit ein Kopplungselement umfasst, das am Fahrzeugboden oder am Fahrzeugdach angeordnet ist und dessen Relativlage gegenüber einem Ladeelement der Ladestation einstellbar ist.

Bei dem im Dachbereich oder Bodenbereich des Fahrzeugs ausgebildeten System kann das Kopplungselement und/oder das Ladeelement mit einer Hebe- und Senkkinematik versehen sein.

Beispielsweise weist das Fahrzeug bei einem induktiven Ladesystem eine Bodenplatte auf, die bei einer im Boden eines Fahrzeugabstellplatzes eingelassenen Primärseite die Sekundärseite bildet und zur Erhöhung des Wirkungsgrades beim Laden abgesenkt werden kann, so dass der Abstand zwischen der Bodenplatte und der Sekundärseite minimiert wird.

Bei einer am Fahrzeugdach ausgebildeten Sekundärseite eines induktiven Ladesystems ist es vorteilhaft, wenn das die Primärseite bildende Ladeelement der Ladestation auf einen minimalen Abstand zu dem die Sekundärseite bildenden Kopplungselement abgesenkt wird. Das Ladeelement kann mit einem Abstandssensor versehen sein, um nicht ungewollt auf das Fahrzeugdach aufzufahren und dieses zu beschädigen. Solche Ladestationen können beispielsweise in Parkanlagen, wie Parkgaragen, Duplexgaragen und dergleichen, integriert werden.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Ladesystems nach der Erfindung sind in der Zeichnung schematisch vereinfacht dargestellt und werden in der nachfolgenden Beschreibung näher erläutert. Es zeigt:
- Fig. 1: eine perspektivische Frontansicht eines Elektrofahrzeugs im mit einer Ladestation gekoppelten Zustand;
- Fig. 2: ein Gehäuse zur Lagerung eines Ladearms an dem Kraftfahrzeug;
- Fig. 3: eine Seitenansicht eines Fahrzeugbugs mit einem Ladearm, der mit einer Induktivkupplung einer Ladestation gekoppelt ist;
- Fig. 4: eine alternative Ausfiihrungsform eines Ladesystems, das als konduktives Ladesystem ausgebildet ist;
- Fig. 5: eine Draufsicht auf einen Fahrzeugbug mit einem Ladearm des in Fig. 4 dargestellten Ladesystems;
- Fig. 6: den Ladearm des in Fig. 4 dargestellten Ladesystems in Alleinstellung;
- Fig. 7: einen in eine Stoßstange eines Kraftfahrzeuges integrierten, schwenkbaren Ladearm; und
- Fig. 8: verschiedene induktiv arbeitende, in eine Garage integrierte Ladesysteme.

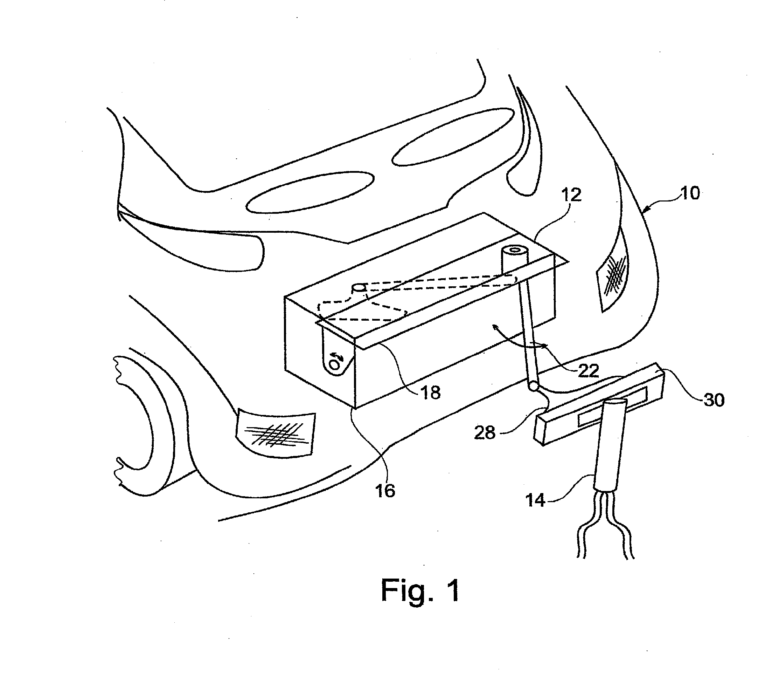

In Fig. 1 ist ein Kraftfahrzeug 10 dargestellt, das als Elektrofahrzeug ausgebildet ist und zum Laden seiner Batterie an seinem Bug eine Kopplungseinheit 12 umfasst, die mit einer stationären, externen Ladestation 14 gekoppelt werden kann. Die Ladestation ist beispielsweise an einem öffentlichen Parkplatz.

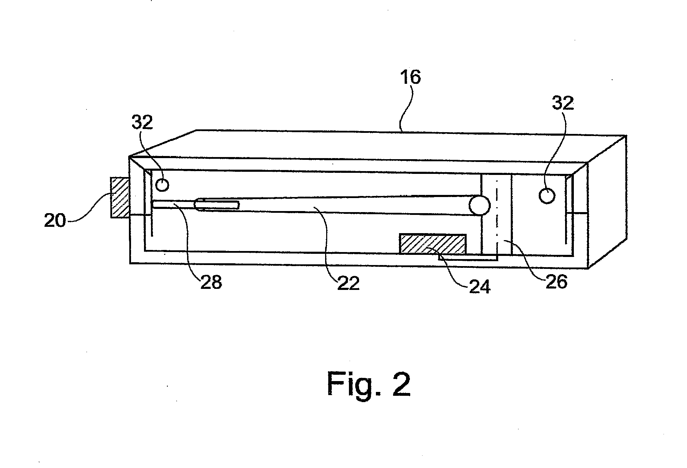

Die Kopplungseinheit 12 umfasst ein Gehäuse 16, das in den Fahrzeugaufbau integriert ist und das an seiner Stirnseite mit einem schwenkbar gelagerten Deckelelement 18 versehen ist. Das verschwenkbar gelagerte Deckelelement 18 stellt ein Kennzeichenfeld des Kraftfahrzeuges 10 dar und ist mit einem in Fig. 2 näher dargestellten Antrieb 20 versehen, der bei Bedarf, das heißt zum Laden der Batterie des Kraftfahrzeuges 10 betätigt werden kann.

In dem Gehäuse 16 ist des Weiteren ein Ladearm 22 über einen mittels eines Elektromotors 24 angetriebenen Bolzen 26 schwenkbar gelagert. Der Bolzen 26 ist zwischen der oberen und der unteren Begrenzungswand des Gehäuses 16 eingespannt. An seiner freien Stirnseite trägt der Ladearm 22 Elektroden 28 zur Kopplung mit Elektroden, die an einem Ladeelement 30 der Ladestation 14 ausgebildet sind.

Um die Elektroden 28 positionsgenau mit den Elektroden des Ladeelements 30 in Eingriff bringen zu können, sind in dem Gehäuse 16 Sensoren 32 ausgebildet, die zum einen den Abstand des Kraftfahrzeuges 10 zur Ladestation 14 bestimmen können und zum anderen als Positionierhilfe zum Heranfahren des Ladearms 22 an das Ladeelement 30 der Ladestation 14 dienen können.

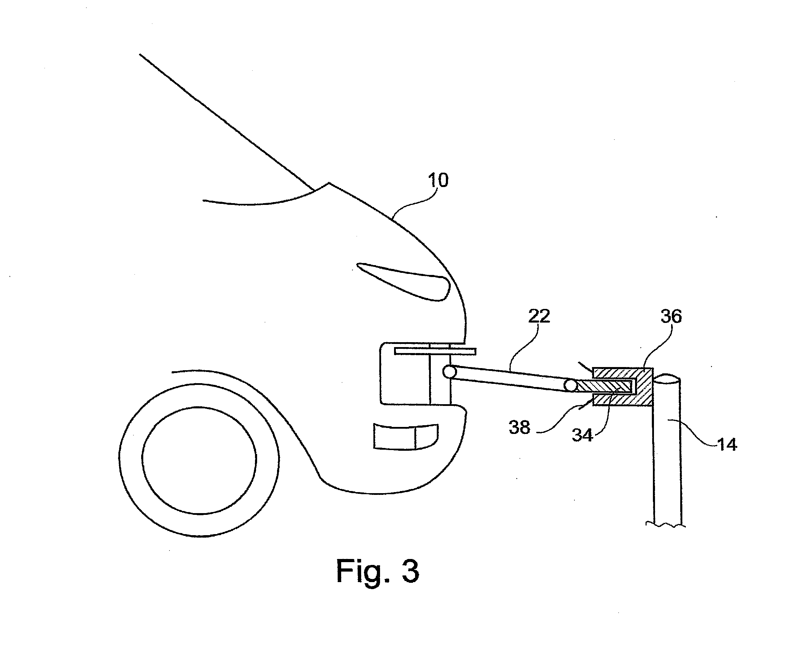

Das in Fig. 3 dargestellte Ausführungsbeispiel unterscheidet sich von demjenigen nach den Figuren 1 und 2 dadurch, dass es ein Ladesystem darstellt, das nicht als konduktiv arbeitendes Ladesystem, sondern als induktiv arbeitendes Ladesystem ausgebildet ist. Insbesondere ist hierbei der Ladearm 22 an seiner freien Stirnseite mit einer ersten Induktivkupplung 34 versehen, die die Sekundärseite des Ladesystems darstellt und mithin mit einer elektrischen Spule versehen ist. In Ladestellung greift die Induktivkupplung 34 des Ladearms 22 in eine zweite Induktivkupplung 36 ein, die die Primärseite des Ladesystems darstellt und ebenfalls mit einer elektrischen Spule versehen ist. Die zweite Induktivkupplung 36 der Ladestation 14 ist schienenartig ausgebildet und weist an ihrer offenen Seite als Fangtrichter ausgebildete Leitbleche 38 auf, die beim Verschwenken des Ladearms 22 die erste Induktivkupplung 34 in die schienenartig ausgebildete, zweite Induktivkupplung 36 führen. Im Übrigen entspricht der Aufbau des in Fig. 3 dargestellten Ladesystems demjenigen des Ladesystems nach den Figuren 1 und 2.

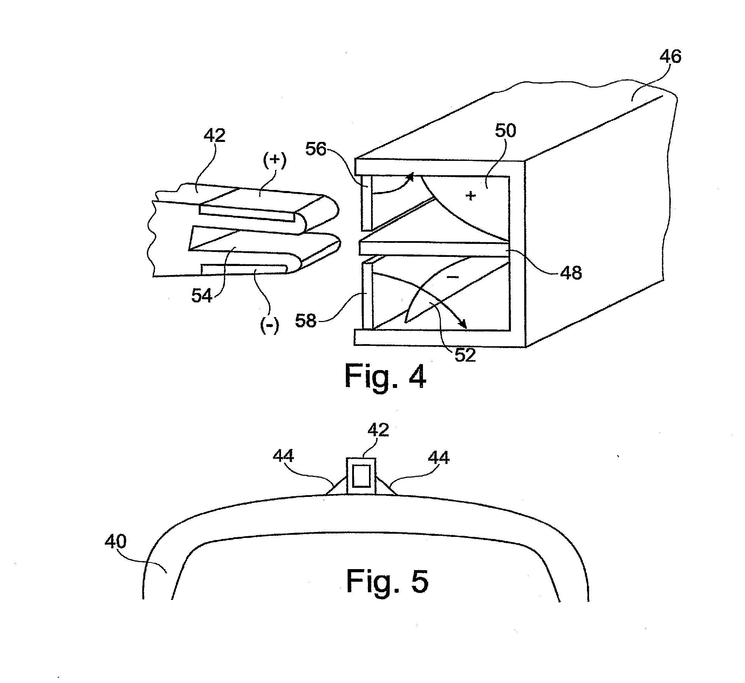

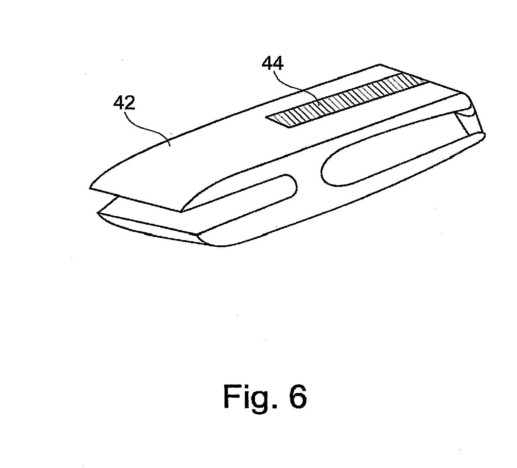

Anhand der Figuren 4 bis 6 ist eine weitere Ausführungsform eines Ladesystems nach der Erfindung dargestellt. Dieses Ladesystem ist in eine bugseitige Stoßstange 40 eines ansonsten nicht näher dargestellten Kraftfahrzeuges integriert und umfasst einen Ladearm 42, der einer fahrzeugfesten Kopplungseinheit zugeordnet ist und der zum Laden der Batterie des als Elektrofahrzeug ausgebildeten Kraftfahrzeuges aus einer Aufnahme der Stoßstange 40 ausgefahren werden kann. Beim Ausfahren des Ladearms 42 fährt dieser auf zwei gefedert gelagerte Klappen 44 auf, so dass diese in Öffnungsstellung geschwenkt werden und der Ladearm 42 bugseitig über die Stoßstange 40 übersteht.

In Ladestellung ist der Ladearm 42, der einen Verzahnungsabschnitt 44 aufweist, in den zum Antrieb ein mittels eines Elektromotors angetriebenes Zahnrad eingreift, mit einer Ladeschiene 46 gekoppelt, die stationär an einem Parkplatz für das betreffende Kraftfahrzeug angeordnet ist.

Die Ladeschiene 46 stellt ein U-förmiges Profil dar, in dem eine Trennwand 48 angeordnet ist, durch die zwei Kontaktfedern 50 und 52 mechanisch und elektrisch voneinander getrennt sind. An den Kontaktfedern 50 und 52, die einem Pluspol bzw. einem Minuspol der Ladeschiene 46 zugeordnet sind, liegen die korrespondierenden Pole des Ladearms 42 in Ladestellung an.

Beim Koppeln des Ladearms 42 des Kraftfahrzeuges mit der Ladeschiene 46 taucht die Trennwand 48 der Ladeschiene 46 in einen die beiden Pole trennenden Schlitz 54 des Ladearms 42 ein. Des Weiteren werden durch das Einführen des Ladearms 42 in die Ladeschiene 46 federbelastete Schutzklappen 56 und 58 der Ladeschiene 46 in Öffnungsstellung verschwenkt.

Denkbar ist es auch, ein induktiv arbeitendes Ladesystem mit dem in den Figuren 4 bis 6 dargestellten Aufbau auszulegen. In diesem Falle wären die Ladeschiene 46 und der Ladearm 42 jeweils mit einer elektrischen Spule versehen, welche der Primärseite bzw. der Sekundärseite des Ladesystems zugeordnet sind.

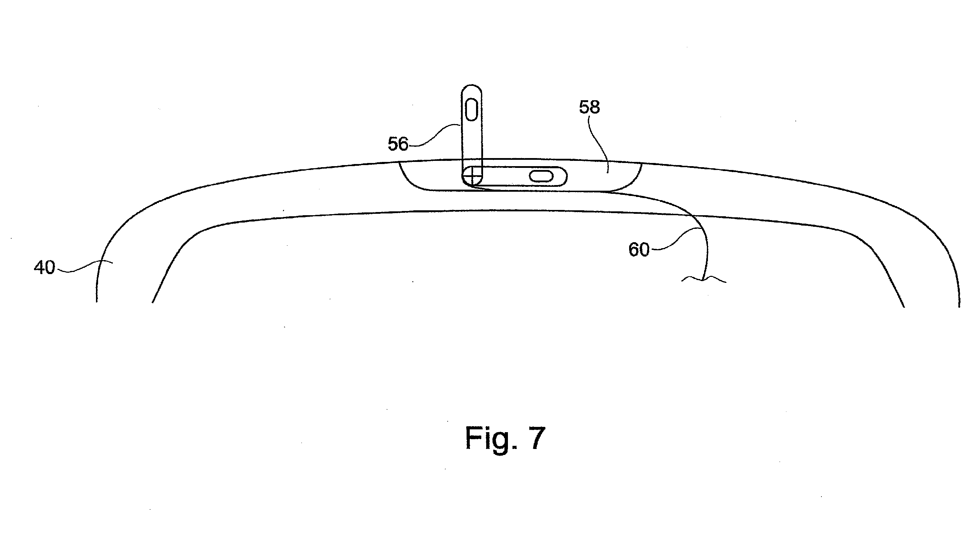

In Fig. 7 ist eine alternative Ausführungsform eines konduktiv arbeitenden Ladesystems dargestellt, bei der ein Ladearm 56 ebenfalls in einer Stoßstange 40 eines Kraftfahrzeugs angeordnet ist. Bei dieser Ausführungsform ist der Ladearm 56 schwenkbar gelagert und zum Verschwenken aus einer Ruhestellung in eine Ladestellung aus einer Ausnehmung 58 der Stoßstange 40 verschwenkbar, so dass er in Fahrtrichtung nach vorne über die Stoßstange 40 vorsteht.

Die in Fig. 7 dargestellte Ausführungsform benötigt nur einen geringen Platzbedarf. Ferner ist für die Ausnehmung 58 nicht zwingend eine Schutzklappe oder dergleichen erforderlich. Der Antrieb des Ladearms erfolgt mittels eines Seilzugs 60, der manuell oder auch mittels eines in günstiger Weise in dem Kraftfahrzeug angeordneten Stellantriebs betätigbar ist.

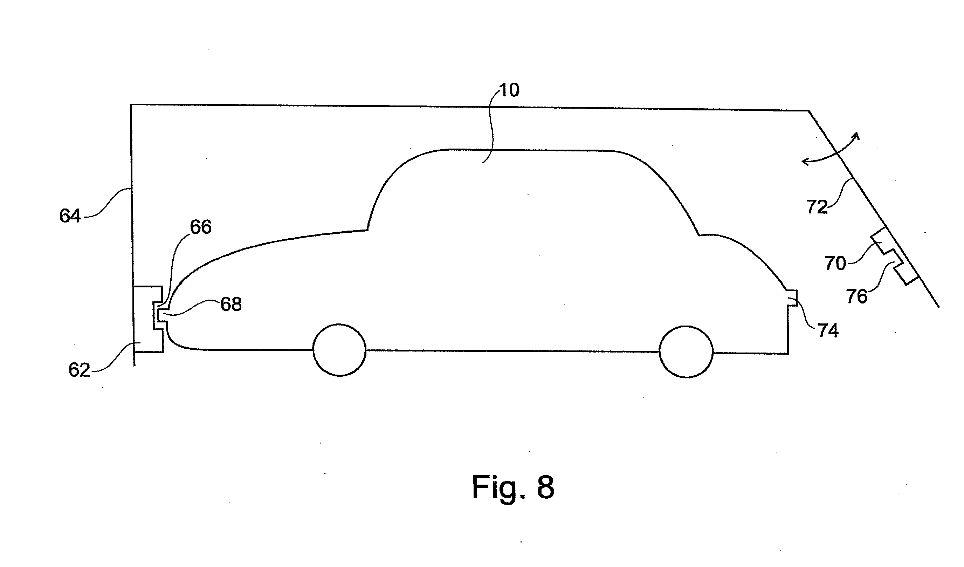

In Fig. 8 sind weitere Ladesysteme nach der Erfindung dargestellt. Eines dieser Ladesysteme umfasst eine Ladeschiene 62 einer Ladestation, die an einer Garagenwand 64 befestigt ist und eine Ausnehmung 66 aufweist. Die Ausnehmung 66 ist in Höhe einer Stoßstange 68 eines Kraftfahrzeuges 10 angeordnet, die in Ladestellung in die Ausnehmung 66 eingreift. Die Stoßstange 68 stellt eine fahrzeugfeste Kopplungseinheit des Ladesystems dar. Das Ladesystem ist als induktiv arbeitendes Ladesystem ausgelegt, wobei die Ladeschiene 62 die Primärseite und die Stoßstange 68 die Sekundärseite des Ladesystems darstellt. Die Ladeschiene 62 kann elastisch gelagert sein. Auch die Stoßstange 68 kann elastisch am Fahrzeugaufbau gelagert sein.

Des Weiteren ist in Fig. 8 ein Ladesystem dargestellt, das eine Ladeschiene 70 aufweist, welche an der Innenseite eines schwenkbaren Garagentors 72 befestigt ist und einer Ladestation zugeordnet ist. In Schließstellung des Garagentors 72 greift eine heckseitige Stoßstange 74 des Kraftfahrzeuges 10 in eine Ausnehmung 76 der Ladeschiene 70 ein. Auch dieses Ladesystem ist als induktiv arbeitendes Ladesystem ausgelegt, wobei die Ladeschiene 70 der Primärseite und die Stoßstange 74 der Sekundärseite des Ladesystems zugeordnet ist. Wenn das Garagentor 72 geschlossen ist und die Stoßstange 74 in die Ausnehmung 76 der Ladeschiene 70 eingreift, wird ein nicht näher dargestellter Aktivierungsschalter betätigt, der den Ladevorgang auslöst, das heißt das Ladesystem aktiviert.

Alternativ kann die am Garagetor oder der Wand ausgebildete Ladeschiene auch so ausgebildet sein, dass sie in der Ladestellung in eine Ausnehmung an der betreffenden Stoßstange des Fahrzeugs eingreift.

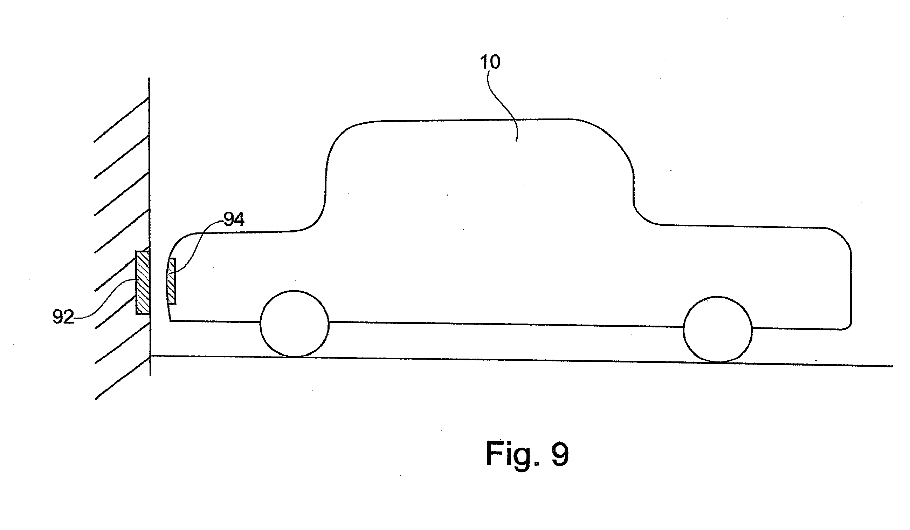

Eine weitere, in Fig. 9 dargestellte Ausführungsform nach der Erfindung, die ebenfalls als induktives Ladesystem ausgebildet ist, weist als Primärseite eine Ladeplatte 92 die an einer Garagenwand moniert ist und das Ladeelement der Ladestation bildet, und fahrzeugseitig eine Kopplungsplatte 94 auf, die das die Sekundärseite des Ladesystems darstellende Kopplungselement der Kopplungseinheit bildet.

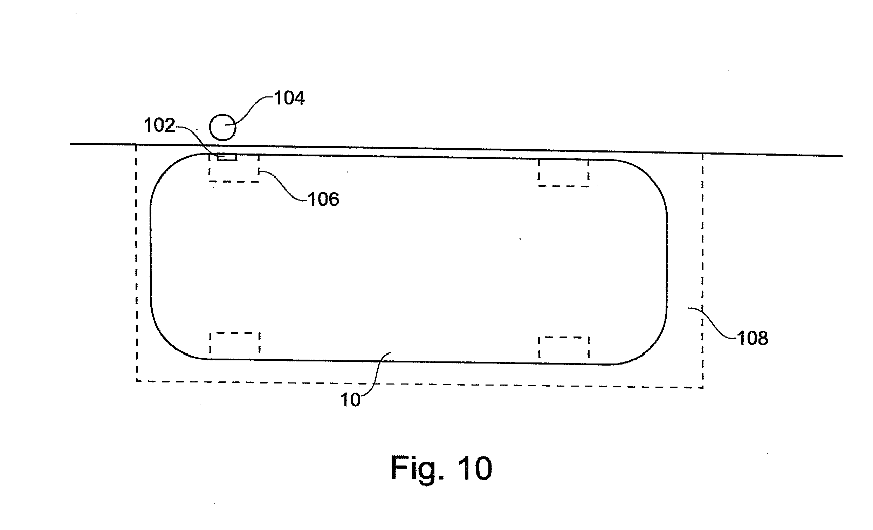

Bei einer weiteren, in Fig. 10 dargestellten Ausführungsform kann ein die Sekundärseite eines induktiven Ladesystems bildende Kopplungselement 102 an der Fahrzeugseite, beispielsweise im Bereich eines Radhauses 106 angeordnet sein. Das die Primärseite bildende Ladeelement der Ladestation ist dann beispielsweise eine Säule 104, die am Rand eines öffentlichen oder privaten Parkplatzes 108 angeordnet ist und an die das betreffende Fahrzeug 10 zum Laden der Batterie auf einen minimalen Abstand herangeführt wird. Dies kann mittels eines automatisierten Positioniersystems erfolgen, das das Fahrzeug selbsttätig in die optimale Parkposition führt, und zwar durch Betätigung des Lenk- und Antriebssystems.

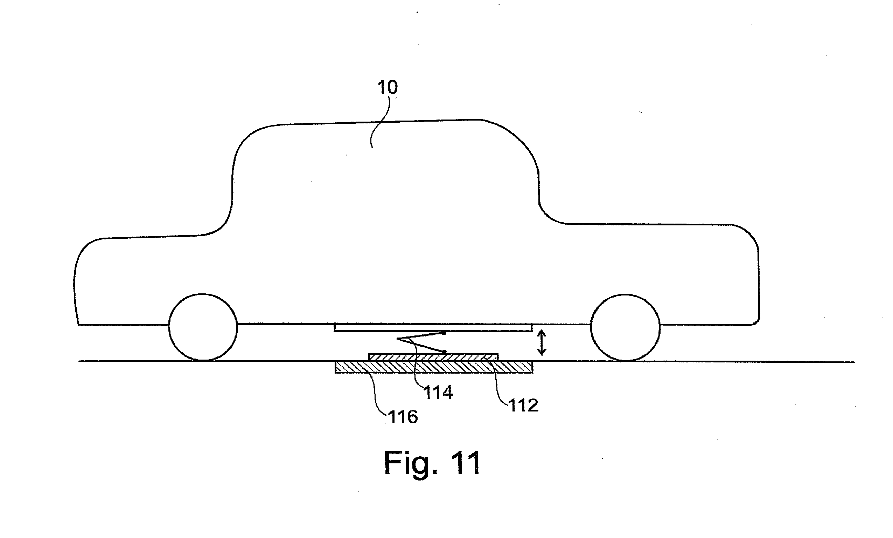

In Fig. 11 ist eine weitere Ausführungsform eines Ladesystems nach der Erfindung am Boden eines Fahrzeugs eine Kopplungsplatte 112 angeordnet, die die Sekundärseite eines induktiven Ladesystems bildet. Die Kopplungsplatte 112 ist mit einer Hebe- und Senkkinematik 114 versehen, die zum Laden der Batterie des als Elektrofahrzeug ausgebildeten Fahrzeugs 10 auf eine Bodenplatte 116 abgesenkt wird, die in einen Abstellplatz für das Fahrzeug integriert ist. Die Habe- und Senkkinematik ist vom Fahrzeuginnenraum aus bedienbar.

### Bezugszeichenliste

- 10: Kraftfahrzeug
- 12: Kopplungseinheit
- 14: Ladestation
- 16: Gehäuse
- 18: Deckelelement
- 20: Antrieb
- 22: Ladearm
- 24: Elektromotor
- 26: Bolzen
- 28: Elektrode
- 30: Ladeelement
- 32: Sensoren
- 34: Induktivkupplung
- 36: Induktivkupplung
- 38: Leitbleche
- 40: Stoßstange
- 42: Ladearm
- 44: Verzahnungsabschnitt
- 46: Ladeschiene
- 48: Trennwand
- 50: Kontaktfeder
- 52: Kontaktfeder
- 54: Schlitz
- 56: Ladearm
- 58: Ausnehmung
- 60: Seilzug
- 62: Ladeschiene
- 64: Garagenwand
- 66: Ausnehmung
- 68: Stoßstange
- 70: Ladeschiene
- 72: Garagentor
- 74: Stoßstange
- 76: Ausnehmung
- 92: Ladeplatte
- 94: Kopplungsplatte
- 102: Kopplungselement
- 104: Säule
- 106: Radhaus
- 108: Parkplatz
- 112: Kopplungsplatte
- 114: Hebe- und Senkkinematik
- 116: Bodenplatte

## Patentansprüche

1. System zum Laden einer Batterie eines Kraftfahrzeuges (10), umfassend eine stationäre Ladestation (14) und eine fahrzeugfeste Kopplungseinheit (12), **dadurch gekennzeichnet, dass** die fahrzeugfeste Kopplungseinheit (12) ein Kopplungselement (22, 42, 56, 68, 74, 94) umfasst, das am Fahrzeugbug, am Fahrzeugheck oder an einer der Fahrzeugseiten angeordnet ist und das zumindest in einer Ladestellung mit einem Ladeelement (30) der Ladestation (14) elektrisch gekoppelt ist, wobei das Kopplungselement (22, 42, 56, 68, 74, 94) gegenüber einem festen Fahrzeugaußenhautabschnitt vorspringt und in das Ladelement (30, 92) der Ladestation eingreift oder in das Kopplungselement in einer Ladestellung das Ladeelement der Ladestation eingreift oder das Kopplungselement bündig, konturfrei oder verdeckt in das Fahrzeugbug, am Fahrzeugheck oder an einer der Fahrzeugseiten integriert ist und in einer Ladestellung mit dem Ladelement der Ladestation induktiv gekoppelt ist.

2. Ladesystem nach Anspruch 1, **dadurch gekennzeichnet, dass** das Kopplungselement (68, 74) starr gegenüber dem Fahrzeugaufbau angeordnet ist.

3. Ladesystem nach Anspruch 2, **dadurch gekennzeichnet, dass** das Kopplungselement (68, 74) zumindest Teil eines Stoßfängers des Kraftfahrzeuges ist, der in der Ladestellung in eine das Ladeelement bildende Ladeschiene (62, 70) der Ladestation (62, 70) eingreift.

4. Ladesystem nach Anspruch 1, **dadurch gekennzeichnet, dass** das Kopplungselement ein Ladearm (22, 42, 56) ist, der vorzugsweise mittels eines Antriebs gegenüber dem Fahrzeugaufbau ausfahrbar ist.

5. Ladesystem nach Anspruch 4, **dadurch gekennzeichnet, dass** der Ladearm (22, 56, 42) verschwenkbar oder linear verschiebbar ist und vorzugsweise einen Zahnstangenabschnitt hat, in den ein Antriebsrad eingreift.

6. Ladesystem nach Anspruche 4 oder 5, **dadurch gekennzeichnet, dass** der Ladearm (22) in einem fahrzeugfesten Gehäuse (16) gelagert ist.

7. Ladesystem nach Anspruch 6, **dadurch gekennzeichnet, dass** das Gehäuse (16) ein verschwenkbares Abdeckelement (18, 58) hat, das vorzugsweise ein Kennzeichenfeld des Kraftfahrzeuges ist.

8. Ladesystem nach einem der Ansprüche 1 bis 7, **dadurch gekennzeichnet, dass** die fahrzeugfeste Kopplungseinheit (12) mindestens einen Abstandssensor (32) zur Bestimmung des Abstands zwischen dem Kopplungselement (22) und dem Ladeelement (30) umfasst.

9. Ladesystem nach einem der Ansprüche 1 bis 8, **gekennzeichnet durch** eine automatische Positioniereinrichtung, die bei abgestelltem Fahrzeug das Kopplungselement (22) zu dem Ladeelement (30) der Ladestation (14) führt oder das Ladeelement der Ladestation zu dem Kopplungselement der fahrzeugfesten Kopplungseinheit führt und/oder das Fahrzeug in eine Ladestellung führt und mit einer Lenkeinheit und/oder einer Antriebseinheit des Fahrzeugs zusammenwirkt.

10. Ladesystem nach einem der Ansprüche 1 bis 9, **dadurch gekennzeichnet, dass** die Ladestation (14) eine Führungseinrichtung (38) zur Kopplung des Kopplungselements (22) der fahrzeugfesten Kopplungseinheit (12) mit dem Ladeelement (36) der Ladestation (14) hat.

11. Ladesystem nach einem der Ansprüche 1 bis 10, **dadurch gekennzeichnet, dass** es ein konduktives Ladesystem ist und das Kopplungselement (42) der fahrzeugfesten Kopplungseinheit und das Ladeelement (46) der stationären Ladestation jeweils zwei Kontaktelemente zur Kopplung der Kopplungseinheit mit der Ladestation umfassen.

12. Ladesystem nach Anspruch 11, **dadurch gekennzeichnet, dass** das Ladeelement (46) eine Schiene mit zwei Kontaktfedern (50, 52) zur jeweiligen Kopplung mit einer Elektrode des Kopplungselements (42) der fahrzeugfesten Kopplungseinheit umfasst.

13. Ladesystem nach einem der Ansprüche 1 bis 10, **dadurch gekennzeichnet, dass** es ein induktives Ladesystem ist und die Ladestation die Primärseite und die fahrzeugfeste Kopplungseinheit die Sekundärseite des induktiven Ladesystems bildet.

14. Ladesystem nach einem der Ansprüche 1 bis 13, **dadurch gekennzeichnet, dass** das Ladeelement der Ladestation an einer Innenseite eines Garagentors (72) angeordnet ist, in dessen Schließstellung das Ladeelement (70) mit dem Kopplungselement (74) der fahrzeugfesten Kopplungseinheit gekoppelt ist.

15. Ladesystem nach einem der Ansprüche 1 bis 14, **gekennzeichnet durch** einen Aktivierungsschalter, der vorzugsweise das Ladesystem aktiviert, wenn das Ladeelement (70) gegenüber dem Kopplungselement (74) eine Ladestellung eingenommen hat.

16. System zum Laden einer Batterie eines Kraftfahrzeuges (10), umfassend eine stationäre Ladestation und eine fahrzeugfeste Kopplungseinheit, **dadurch gekennzeichnet, dass** die fahrzeugfeste Kopplungseinheit ein Kopplungselement (112) umfasst, das am Fahrzeugboden oder am Fahrzeugdach angeordnet ist und dessen Relativlage gegenüber einem Ladeelement (116) der Ladestation einstellbar ist.

17. System nach Anspruch 16, **dadurch gekennzeichnet, dass** das Kopplungselement (112) und/oder das Ladeelement (116) mit einer Hebe- und Senkkinematik (114) versehen sind/ist.
